# EUROPÄISCHE PATENTSCHRIFT

(11) **EP 1 525 762 B1**
(45) Veröffentlichungstag und Bekanntmachung des Hinweises auf die Patenterteilung: **25.01.2006**
(21) Anmeldenummer: 03787670.3
(22) Anmeldetag: 15.07.2003
(51) Int. Cl.: H04Q 7/22

(54) **VERFAHREN, TEILNEHMERGERÄT SOWIE FUNKKOMMUNIKATIONSSYSTEM ZUM ÜBERTRAGEN VON NUTZDATENNACHRICHTEN**
METHOD, SUBSCRIBER TERMINAL AND RADIO COMMUNICATION SYSTEM FOR TRANSMITTING USER DATA MESSAGES
PROCEDE, TERMINAL D'ABONNE ET SYSTEME DE RADIOCOMMUNICATION POUR LA TRANSMISSION DE MESSAGES CONTENANT DES DONNEES UTILES

(30) Priorität: 02.08.2002 DE 10235470
(43) Veröffentlichungstag der Anmeldung: 27.04.2005
(73) Patentinhaber: SIEMENS AKTIENGESELLSCHAFT, 80333 München (DE)
(72) Erfinder: OTTE, Andreas, 29227 Celle (DE); ECKERT, Michael, 38122 Braunschweig (DE); BECKMANN, Mark, 38124 Braunschweig (DE); HANS, Martin, 31139 Hildesheim (DE)
(86) Internationale Anmeldenummer: PCT/DE2003/002381
(87) Internationale Veröffentlichungsnummer: WO 2004/017649

(56) Entgegenhaltungen:
- EP-A- 0 944 275
- EP-A- 1 353 523
- WO-A-00/72609
- "3RD GENERATION PARTNERSHIP PROJECT; TECHNICAL SPECIFICATION GROUP RADIO ACCESS NETWORK; RADIO INTERFACE FOR BROADCAST/MULTICAST SERVICES (RELEASE 1999)" 3GPP TR 25.925 V3.4.0, XX, XX, März 2001 (2001-03), Seiten 1-31, XP002191629

## Beschreibung

Die vorliegende Erfindung betrifft ein Verfahren zum Übertragen von Nutzdatennachrichten von einem Versender an einen oder mehrere Empfänger, ein Teilnehmergerät sowie ein Funkkommunikationssystem.

Bei vielen in modernen Mobilfunksystemen angebotenen Diensten und Anwendungen sollen Nachrichten nicht nur zu einem, sondern zu zwei und mehreren Mobilfunkteilnehmern übertragen werden. Beispiele für solche Dienste und Anwendungen sind News-Groups, Video-Konferenzen, Video-On-Demand, verteile Anwendungen usw.

Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über N (N entspricht der Anzahl von Empfängern) Einzelverbindungen bzw. Unicast-Verbindungen übertragen wird und dabei mehrfach über gemeinsame Verbindungswege gesendet wird, benötigt dieses Verfahren eine sehr hohe Bandbreite.

Das Dokument EP-A-0 944 275 offenbart ein Verfahren zum Übertragen von Nutzdatennachrichten von einem Netzwerkelement eines Funkkommunikationssystems über mindestens einen Übertragungskanal an ein oder mehrere Teilnehmergeräte des Funkkommunikationssystems.

Das Dokument WO 00/72609 offenbart auch ein Verfahren und eine Vorrichtung zum Übertragen von Nutzdatennachrichten (Broadcast System) in einem zellularen Netz. Das Dokument XP002191629 liefert allgemeine Hintergrundinformationen über die Luftschnittstelle für multicast/broadcast services in 3GPP.

Eine vorteilhaftere Möglichkeit bietet die Multicast (Gruppenruf)-Übertragung. Hierbei werden die verschiedenen Teilnehmer, denen dieselbe Nachricht übermittelt werden soll, zu einer Multicast-Gruppe zusammengefasst und dieser eine Adresse, genauer gesagt Multicast-Adresse, zugeordnet. Die zu übertragenden Daten werden daraufhin nur einmal an diese Multicast-Adressegesendet. Über gemeinsame Verbindungswege vom Sender zu den Empfängern wird die Multicast-Nachricht im Idealfall nur einmal gesendet. Der Sender muss nicht wissen, wo und wie viele Empfänger sich hinter der Multicast-Adresse verbergen.

Beim Broadcast (Sammelruf) werden Nachrichten an alle Teilnehmer innerhalb eines geographischen Gebietes gesendet. Ein solches Gebiet kann beispielsweise durch einen Teil des Gesamtnetzes bestimmt sein. Wie beim Multicast wird die Broadcast-Nachricht dabei über gemeinsame Verbindungswege vom Sender zu den Empfängern im Idealfall nur einmal gesendet. Jeder Teilnehmer muss an seinem Endgerät Einstellungen zur Freigabe vornehmen, sofern er nachfolgend Broadcast-Pakete von einer entsprechenden Broadcast-Gruppe auswerten will. Er kann so bestimmen, ob er alle Broadcast-Nachrichten empfangen oder verwerfen möchte, oder ob er nur bestimmte Nachrichten empfangen möchte.

Im Zuge eines bekannten Verfahrens zur Datenübermittlung wird zwischen einem Netzwerk und einem Mobilfunkgerät normalerweise innerhalb einer bestimmten Zeit immer eine bestimmte Menge von Rahmen oder Frames ausgetauscht. Ein Frame ist dabei eine zeitliche Struktur, auf der z.B. im UMTS (Universal Mobile Telecommunications System) die gesamte Signalverarbeitung und Datenübertragung beruht, siehe auch [2].

Wenn alle diese Frames fortlaufend übertragen und vom Mobilfunkgerät empfangen werden, spricht man von fortlaufender Übertragung bzw. Continuous Reception. Es ist aber auch möglich, bei der Übertragung einen unterbrochenen (diskontinuierlichen) Empfang bzw. eine sogenannte Discontinuous Reception DRX anzuwenden, um beispielsweise den Energiebedarf der Mobilfunkgeräte zu reduzieren. Bei Anwendung von DRX werden die Frames nicht fortlaufend übertragen und vom Mobilfunkgerät empfangen, sondern es werden bestimmte Frames ausgelassen. Es muss in diesem Modus jedoch mindestens eine bestimmte Untermenge aller Frames bzw. ein Subset der möglichen Frames übertragen werden, um die Verbindung aufrecht zu erhalten.

Es ist nun auch denkbar, bei der Übertragung von Nachrichten bzw. Daten zu verschiedenen Teilnehmern auch eine Übertragung von Nachrichten mit multimedialen Inhalten vorzusehen. Als problematisch kann sich jedoch dabei heraussteilen, dass nicht alle Datentypen von übertragenen multimedialen Nachrichten von jedem Teilnehmergerät verarbeitet werden können. Dabei ist es nun beispielsweise möglich, dass ein Teilnehmergerät zum Empfang von bestimmten multimedialen Nachrichten, die Audio- und Videodaten umfassen, Ressourcen und Energie aufwendet, und sich dann bei der Verarbeitung der Nachrichten herausstellt, dass das Teilnehmergerät gar nicht dafür ausgelegt ist, Videodaten zu verarbeiten bzw. abzuspielen. Es wird in einem derartigen Fall also nutzlos Energie verschwendet und die Standzeit des Teilnehmergeräts verringert.

Es ist nun die Aufgabe der vorliegenden Erfindung eine Möglichkeit zu schaffen, die eine effiziente, ressourcen- und energiesparenden Übertragung von Daten bzw. Nachrichten an einen oder mehrere Empfänger eines Punkt-zu-Mehrpunkt Dienstes realisiert.

Diese Aufgabe wird durch ein Verfahren gemäß Anspruch 1, ein Teilnehmergerät gemäß Anspruch 12, sowie ein Funkkommunikationssystem gemäß Anspruch 13 gelöst. Vorteilhafte Ausgestaltungen sind Gegenstand der Unteransprüche.

Gemäß einem Verfahren zum Übertragen von Nutzdatennachrichten von einem Netzwerkelement eines Funkkommunikationssystems über mindestens einen Übertragungskanal an ein oder mehrere Teilnehmergeräte des Funkkommunikationssystems, wird mittels einer Planungsinformation die Form der Nutzdatennachrichten vor deren Übertragung angekündigt. Insbesondere wird hierbei die Form hinsichtlich der Verarbeitung der Nutzdatennachrichten durch das eine oder die mehreren Teilnehmergeräte angekündigt. Der Vorteil eines derartigen Verfahrens liegt darin, dass das oder die Teilnehmergeräte durch die Ankündigung der Form der Nutzdatennachrichten schon vor deren tatsächlicher Übertragung bzw. vor deren tatsächlichem Empfang wissen, ob es oder sie in der Lage sind, die Nutzdatennachrichten derart zu verarbeiten, um sie für den Benutzer des Teilnehmergeräts nutzbar zu machen (Anzeigen eines in den Nutzdatennachrichten enthaltenen Bildes, Abspielen einer Audio-Datei, usw.). Das bedeutet, das eine oder die mehreren Teilnehmergeräte können sich aufgrund der Planungsinformation dafür entscheiden, nur diejenigen Nutzdatennachrichten zu empfangen, bei denen sie auch in der Lage sind, diese zu verarbeiten, wodurch Ressourcen und auch Energie bei den Teilnehmergeräten gespart werden kann.

Gemäß einer vorteilhaften Ausgestaltung ist das Verfahren als ein zweistufiges Verfahren realisiert, bei dem die Planungsinformation mittels zweier separater Planungsnachrichten an das eine bzw. die mehreren Teilnehmergeräte übertragen wird. Mittels einer ersten Planungsnachricht wird über einen ersten separaten Übertragungskanal das Übertragen der Nutzdatennachrichten angekündigt. Genauer gesagt, kann die erste Planungsnachricht Informationen darüber enthalten, wann bzw. auf welchem mindestens einen zweiten separaten Übertragungskanal zweite Planungsnachrichten bzw. Nutzdatennachrichten übertragen werden. Mittels der zweiten Planungsnachricht wird dann über den mindestens einen angekündigten zweiten separaten Übertragungskanal eine Beschreibungsinformation übertragen, die die Form der zu übertragenden Nutzdatennachrichten angibt.

Gemäß dem Verfahren kann die Form der zu übertragenden Nutzdatennachrichten den Datentyp und ferner die Kodierung der Nutzdatennachrichten umfassen. Der Datentyp kann dabei ein Text-, Bild-, Audio-, oder Video-Format usw. umfassen. Die Kodierung kann ein MP3 (Moving Picture Experts Group Layer-3 Audio)-Format, AMR (Adaptive Multi-Rate)-Format, WAV (Windows Wave)-Format, JPEG (Joint Photographic Experts Group)-Format oder ein MPEG4 (Motion Picture Experts Group 4)-Format umfasst. Es ist ferner denkbar, dass die Beschreibungsinformation bezüglich der unkodierten oder kodierten Nutzdatennachrichten ferner Parameter beispielsweise mit Bezug auf den Datenumfang, die Bildabmessung bei Bild- und/oder Videodaten, oder die Abspieldauer bei Audio- und/oder Videodaten umfasst.

Gemäß einer weiteren vorteilhaften Ausgestaltung kann das Verfahren zur Nutzdatenübertragung, insbesondere in der zweistufigen Ausgestaltung, im Rahmen eines Broadcast-Dienstes, hier insbesondere als Erweiterung eines Cell Broadcast Service (CBS), oder eines Multicast-Dienstes durchgeführt werden. Diesbezüglich ist eine Anwendung des Verfahrens als Erweiterung eines in UMTS spezifizierten Cell Broadcast Service denkbar, was voraussetzt, dass das Funkkommunikationssystem nach dem UMTS-Standard betrieben wird.

Wie bereits erwähnt, kann das eine oder die mehreren Teilnehmergeräte die Planungsinformation, insbesondere die zweite Planungsnachricht bzw. der darin enthaltenen Beschreibungsinformation der zu übertragenen Nutzdatennachrichten, analysieren und kann somit nur diejenigen Nutzdatennachrichten empfangen bzw. von dem zumindest einen zweiten Übertragungskanal abhören, für deren Verarbeitung es oder sie ausgelegt sind. Auf diese Weise wird der Verarbeitungsaufwand in einem Teilnehmergerät und somit auch dessen Energieverbrauch verringert.

Gemäß einer vorteilhaften Ausgestaltung wird als Teilnehmergerät ein Mobilfunkgerät, insbesondere ein Mobiltelefon, verwendet.

Gemäß einem weiteren Aspekt der Erfindung wird ein Teilnehmergerät für ein Funkkommunikationssystem geschaffen, das derart ausgebildet ist, dass es nach einem der oben beschriebenen Verfahren betreibbar ist.

Gemäß einem weiteren Aspekt der Erfindung wird ein Funkkommunikationssystem zur Durchführung eines der oben beschriebenen Verfahren geschaffen.

Bevorzugte Ausführungsformen der vorliegenden Erfindung werden nachfolgend Bezug nehmend auf die beiliegenden Zeichnungen näher erläutert. Es zeigen:
- Figur 1: in schematischer Darstellung Komponenten eines Funkkommunikationssystems zur Benachrichtigung einer Gruppe von einem oder mehreren Teilnehmergeräten;
- Figur 2: in schematischer Darstellung ein Schichtenmodell der Protokolle auf der Luftschnittstelle zwischen einem Teilnehmergerät und der zuständigen Basisstation in der Funkzelle dieses Teilnehmergeräts bei dem Funkkommunikationssystem nach Figur 1, insbesondere nach dem UMTS-Standard;
- Figur 3: ein Zuweisung von Frames bzw. Rahmen zu einem logischen Kanal CTCH, über den die Übertragung von Cell Broadcast-Nachrichten stattfindet;
- Figur 4: ein Index Schema, wie es für Cell Broadcast Service (CBS) im Discontinuous Reception (DRX)-Modus verwendet wird, um den Mengen bzw. Sets von Ressourcen bzw. Frames einen Index zuzuordnen;
- Figur 5: eine schematische Darstellung der Komponenten einer herkömmlichen BMC-Planungsnachricht bzw. zweiten Planungsnachricht;
- Figur 6: eine schematische Darstellung der Komponenten einer BMC-Planungsnachricht bzw. zweiten Planungsnachricht, die gemäß einer bevorzugten Ausführungsform erweitert ist.

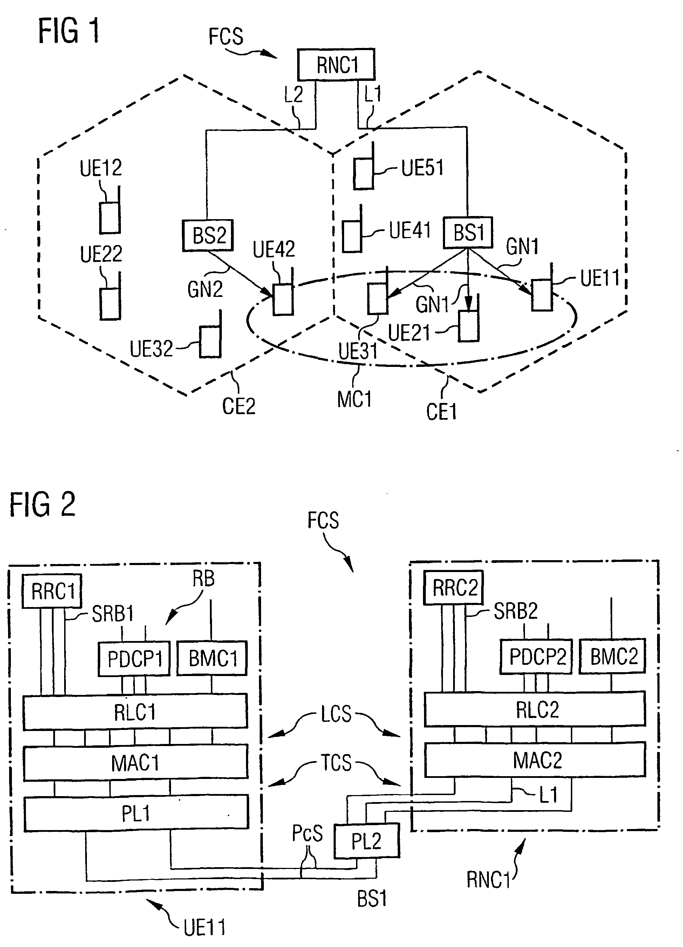

Figur 1 zeigt in schematischer Darstellung beispielhaft zwei Funkzellen CE1, CE2 eines Funkkommunikationssystems FCS, das insbesondere nach dem UMTS (Universal Mobile Telecommunication System)-Standard betrieben wird. Die Funkzelle CE1 wird dabei von der Basisstation BS1 funktechnisch aufgespannt, während die zweite Funkzelle CE2 von der Basisstation BS2 aus versorgt wird. Die beiden Basisstationen BS1, BS2 stehen dabei stellvertretend für eine Vielzahl von weiteren, in der Figur 1 nicht dargestellten Basisstationen des Funkkommunikationssystems FCS, die entsprechende Funkzellen aufweisen und abdecken. Die jeweilige Basisstation ist vorzugsweise durch mindestens einen Funksender und mindestens einen Funkempfänger gebildet. Sie weist vorzugsweise mindestens eine Sendeantenne auf. Zusätzlich oder unabhängig zu ihrer Funktion, eine Funkverbindung zu Teilnehmergeräten des Funkkommunikationssystems FCS bereitzustellen, kann die jeweilige Basisstation jeweils für die Daten-/Nachrichtenübermittlung zu einem etwaig vorhandenen Nachrichten-/Datenfestnetz sorgen.

Im Funkkommunikationssystem FCS werden Nachrichten-/Datensignale über mindestens eine vordefinierte Luftschnittstelle zwischen mindestens einem Teilnehmergerät, insbesondere Mobilfunkgerät wie z.B. Handy, und mindestens einer Basisstation vorzugsweise nach einem Zeitmultiplex-Vielfachzugriffs-Übertragungsverfahren übertragen. Es ist vorzugsweise als Mobilfunksystem nach dem UMTS-Standard ausgebildet. Insbesondere wird es im sogenannten FDD-Mode (FDD: Frequency Division Duplex) betrieben. Im FDD-Mode wird eine getrennte Signalübertragung in Up- und Down-Link-Richtung (Up-Link = Signalübertragung vom Mobilfunkgerät zur jeweiligen Basisstation; Down-Link = Signalübertragung von der jeweilig zugeordneten Basisstation zum Mobilfunkgerät) durch eine entsprechende separate Zuweisung von Frequenzen oder Frequenzbereichen erreicht. Mehrere Teilnehmer in derselben Funkzelle werden vorzugsweise über orthogonale Codes, insbesondere nach dem sogenannten CDMA-Verfahren (CDMA: Code Division Multiple Access) getrennt.

Als Teilnehmergeräte sind vorzugsweise Mobilfunkgeräte z.B. in Form von Mobilfunktelefonen, insbesondere Handys vorgesehen. Daneben können als Teilnehmergeräte auch sonstige Nachrichten- und/oder Datenübertragungsgeräte wie z.B. internetfähige Endgeräte, Computer, Fernsehgeräte, Notebooks, Faxgerät, usw. mit zugeordneter Funkeinheit zum Kommunikationsverkehr "On-air", d.h. über mindestens eine Luftschnittstelle, Komponenten des Funkkommunikationsnetzes sein. Die Teilnehmergeräte halten sich dabei insbesondere mobil bzw. portabel, d.h. an wechselnden Orten im Funknetz auf, können dort aber auch gegebenenfalls ortsfest angeordnet sein.

In der Figur 1 werden die beiden Basisstationen BS1, BS2 über zugehörige Datenleitungen L1, L2 von einer übergeordneten Funknetzwerk-Kontrolleinheit RNC1 aus gesteuert bzw. kontrolliert. Diese überwacht die Zuordnung von Funkressourcen in den Funkzellen CE1, CE2 der Basisstationen BS1, BS2. Im vorliegenden Ausführungsbeispiel halten sich in der Funkzelle CE1 der Basisstation BS1 eine Vielzahl von Teilnehmergeräten UE11 mit UE51 auf. Ebenso sind momentan in der zweiten Funkzelle CE2 der Basisstation BS2 mehrere Teilnehmergeräte UE12 mit UE42 vorhanden. Die Teilnehmergeräte UE11, UE21, UE31 in der ersten Funkzelle CE1 sowie das Teilnehmergerät UE42 in der zweiten Funkzelle CE2 sind vorab einer vordefinierbaren Gruppe MC1 zugeordnet, für die der Empfang von einer oder mehreren Gruppennachrichten in möglichst effizienter Weise bereitgestellt werden soll.

Unter dem Begriff "Gruppe von Teilnehmergeräten" wird im Rahmen der Erfindung vorzugsweise eine Klassifizierung nach technischem Service verstanden, d.h. z.B. insbesondere eine Einteilung nach solchen Teilnehmergeräten, die eine Multicast-Übertragung oder eine Broadcast-Übertragung erlauben. Weiterhin können die Teilnehmergeräte in den Funkzellen des Funkkommunikationsnetzes auch nach einer Vielzahl anderer Kriterien, insbesondere z.B. Art der Gruppennachricht wie z.B. Sportnachrichten, Wettervorhersagen, usw., oder Entstehungsgrund, usw. einsortiert bzw. eingeteilt werden.

Bei vielen in modernen Mobilfunksystemen angebotenen Diensten und Anwendungen ist es insbesondere wünschenswert, Nachrichten nicht nur zu einem, sondern zu zwei und mehreren Mobilfunkteilnehmern zu übertragen. Beispiele für solche Dienste und Anwendungen sind News-Groups, Video-Konferenzen, Video-On-Demand, verteilte Anwendungen, usw.

Der Protokollstapel bzw. das Schichtenmodell der Protokolle auf der Luftschnittstelle in UMTS ist in Figur 2 beispielhaft für das Teilnehmergerät UE11 in der Funkzelle CE1 der Basisstation BS1 dargestellt. Die Mobilfunkstation UE11 weist eine physikalische Schicht (Physical Layer) PL1 auf, die sendeseitig für die Verarbeitung der Daten zur Übertragung über die Luftschnittstelle über physikalische Kanäle PCS verantwortlich ist, und empfangsseitig die empfangenen Daten so an die darüber liegende Medienzugangskontrollschicht MAC1 (MAC = Medium Access Control) weitergibt, dass sie von dieser Schicht weiterverarbeitet werden können. Netzwerkseitig befindet sich die physikalische Schicht PL2 in der Basisstation BS1, welche über eine Festnetzverbindung mit der Funknetzwerk-Kontrolleinheit RNC1 (Radio Network Controller) verbunden ist. Die Verbindungen zwischen der physikalischen Schicht und der MAC-Schicht werden Transportkanäle genannt und geben an, wie die Daten übertragen werden (z.B. auf allgemeinen Kanälen, die von jedem Mobilfunkgerät in der Funkzelle der Basisstation gehört werden, oder auf Kanälen, die lediglich einer bestimmten Mobilfunkstation spezifisch gewidmet sind). Die MAC-Schicht hat Aufgaben, wie z.B. die Identifizierung der Nutzer, für die ein zu übertragendes Datenpaket bestimmt ist, falls es auf allgemeinen Kanälen übertragen wird, sowie die Abbildung logischer Übertragungskanäle (LCS) auf die Transportkanäle (TCS). Dafür fügt die MAC-Schicht sendeseitig Kontrollinformationen wie z.B. die Identität der jeweiligen Mobilfunkstation zu den zu übertragenden Datenpaketen hinzu, die sie von einer weiteren, höheren Schicht RLC (= Radio Link Control) erhalten hat. In der Mobilfunkstation UE11 ist diese RLC-Schicht mit RLC1 bezeichnet. In der Basisstation BS1 hat diese RLC-Schicht das Bezugszeichen RLC2. Als logische Kanäle werden dabei die Verbindungen zwischen der jeweiligen MAC-Schicht wie z.B. MAC1 im Teilnehmergerät UE11 sowie MAC2 in der Funknetzwerk-Kontrolleinheit RNC1 und der jeweilig zugeordneten Funkverbindungskontrollschicht RLC1 bzw. RLC2 (Radio Link Control) bezeichnet. Zur Abbildung der logischen Übertragungskanäle auf die Transportkanäle fügt die jeweilige MAC-Schicht senderseitig Kontrollinformationen wie z.B. die Identität der jeweiligen Mobilfunkstation zu den zu übertragenden Datenpaketen hinzu, die sie von der jeweilig höheren RLC-Schicht erhalten hat. Empfangsseitig werden diese Kontrollinformationen ausgewertet und wieder von den Datenpaketen entfernt, bevor diese über die logischen Verbindungen an die RLC-Schicht weitergeleitet werden.

Die jeweilige RLC-Schicht RLC1 bzw. RLC2 ist jeweils verantwortlich für die Überwachung der Datenübertragung, d.h. für die Feststellung von fehlenden Datenpaketen und eventuell deren erneute Anforderung. In der RLC-Schicht können mehrere Einheiten definiert werden. Jede RLC-Einheit weist dabei mindestens eine Verbindung zwischen höheren Schichten und RLC-Schicht (z.B. Radio Bearer RB) auf. Auch die RLC-Schicht kann sendeseitig den Paketen, die sie von höheren Schichten bekommen hat, Kontrollinformationen hinzufügen. Diese Kontrollin-formationen werden empfangsseitig genutzt, um z.B. zu beurteilen, ob Pakete fehlen. Sie werden von den Paketen entfernt, bevor diese wieder an die höheren Schichten weitergeleitet werden. Oberhalb der RLC-Schicht befindet sich die Funkressourcen-Kontrollschicht RRC (Radio Ressource Control). Im einzelnen ist diese hier beim Teilnehmergerät UE11 mit RRC1 sowie bei der zugeordneten Funknetzwerk-Kontrolleinheit RNC1 mit RRC2 bezeichnet. Die jeweilige RRC-Schicht ist für die Konfiguration der unter ihr liegenden Schichten und vor allem für den Verbindungsaufbau verantwortlich. Die Verbindungen zwischen der jeweiligen RLC-Schicht und der RRC-Schicht werden SRBs (Signalling Radio Bearers) genannt und sind für das Teilnehmergerät UE11 mit RRC1 sowie für die Funknetzwerk-Kontrolleinheit RNC1 mit SRB2 bezeichnet.

Außerdem befinden sich oberhalb der jeweiligen RLC-Schicht die sogenannten RBs (Radio Bearer), die für die eigentliche Datenübertragung verwendet werden und die Verbindung zwischen der RLC-Schicht und der darüber liegenden Anwendung darstellen. Werden Paketdaten übertragen, befindet sich oberhalb der jeweiligen RLC-Schicht noch die sogenannte Paketdaten-Konvergenzschicht (PDCP = Packet Data Convergence Protocol), wie z.B. hier PDCP1 für das Teilnehmergerät UE11 sowie PDCP2 für die Funknetzwerk-Kontrolleinheit RNC1, die z.B. für die Komprimierung von IP-Paketen (Internet Protokoll) zuständig ist. Weiterhin befindet sich oberhalb der RLC-Schicht des Teilnehmergeräts UE11 sowie der Funknetzwerkkontrolleinheit RNC1 der Basistation BS1 jeweils noch die sogenannte Broadcast-Multicast-Kontrollschicht BMC1 bzw. BMC2 (BMC = Broadcast Multicast Controller), welche für den Empfang von etwaigen Cell-Broadcast-Nachrichten (CBS-Nachrichten) verwendet wird. In der jeweiligen BMC-Schicht können ähnlich wie für die RLC-Schicht mehrere BMC-Einheiten definiert sein. zusammenfassend kann also gesagt werden, dass die Übertragung über die Luftschnittstelle über sogenannte physikalische Kanäle realisiert wird. Die Übertragungsdienste der Bitübertragungsschicht bzw. der physikalischen Schicht werden an den Dienstzugangspunkten über die Transportkanäle erbracht. Transportkanäle werden dadurch charakterisiert, wie die Daten übertragen werden. Die Übertragungsdienste der Kontroll- bzw. MAC-Schicht werden über die logischen Kanäle erbracht. Logische Kanäle werden dadurch charakterisiert, was für eine Art von Daten übertragen werden. Unterschieden werden dabei Kontrolldaten und Traffic- bzw. Nutzdaten.

In Folgenden werden unterschiedliche logische Kanäle und Transport-Kanäle angesprochen und sollen deshalb nun kurz erläutert werden:

CBS-Nachrichten werden zwischen RLC und MAC über einen logischen Kanal mit der Bezeichnung Common Traffic Channel CTCH übertragen. Der CTCH dient zur Übertragung von Daten der Nutzerebene an alle Teilnehmer-Endgeräte UEs (insbesondere UE11) oder eine Gruppe von UEs. Der CTCH ist ein unidirektionaler Punkt-zu- Mehrpunkt-Kanal der Abwärtsstrecke, der auf einen Transport-Kanal bzw. Forward Access Channel FACH abgebildet wird. Der FACH ist ein gemeinsamer Transportkanal auf der Abwärtsstrecke, der zur Übertragung relativ kleiner Datenmengen dient. Der FACH wird daraufhin auf einen physikalischen Kanal bzw. Funkkanal mit der Bezeichnung Secondary Common Control Physical Channel (S-CCPCH) abgebildet. Grundsätzlich trägt der S-CCPCH Informationen des FACH und eines oder mehrerer Paging Cannels PCH. Ein physikalischer Kanal bzw. Funkkanal Primary Common Control Physical Channel (P-CCPCH) überträgt die Informationen des BCH.

Der logische Kanal Broadcast Control Channel BCCH ist ein gemeinsamer Kanal der Abwärtsstrecke, auf dem Kontrolldaten an alle UEs in einer Funkzelle rundgesendet werden. Diese Kontrolldaten sind beispielsweise die System Information Blöcke (SIB). Abgebildet wird der BCCH entweder auf den FACH oder auf den Broadcast Channel BCH.

Eine Übertragung von Daten bei unterbrochenem (diskontinuierlichem) Empfang bzw. eine sogenannte Discontinuous Reception DRX ist eingangs bereits als eine bekannte Maßnahme beschrieben worden, um beispielsweise den Energiebedarf der Mobilfunkgeräte zu reduzieren. DRX wird unter anderem für den im UMTS spezifizierten Cell Broadcast Service CBS angewendet. Die System-interne Planung dazu, wann Frames (Rahmen) bzw. Ressourcen für CBS-Services zur Verfügung stehen und wann diese Ressourcen CBS-Nachrichten transportieren, werden durch sogenannte Scheduling-Informationen oder Planungsnachrichten bekannt gemacht. Diese Planung ist in zwei Stufen realisiert:

Die erste Stufe der Planung (CB DRX Level 1) soll signalisieren (innerhalb der ersten Planungsnachricht oder CB DRX Level 1-Nachricht), welcher Übertragungskanal bzw. welcher FACH (als zumindest ein zweiter separater Übertragungskanal) genutzt wird und wann auf diesem Kanal Nachrichten übertragen werden, d.h. welche Ressourcen des FACH bzw. welche Frames des S-CCPCH überhaupt für die Übertragung von "Cell Broadcast"-Nachrichten reserviert bzw. zugewiesen sind. Diese Signalisierung soll als Teil der System-Informationen bzw. System-Information-Nachrichten zum RRC (RRC1) über den zellspezifischen und logischen Kanal BCCH (als erstem separatem Übertragungskanal) übertragen werden. Genauer gesagt werden diesbezügliche Informationselemente (IE) definiert, die innerhalb der System-Information-Nachrichten auf dem BCCH gesendet werden. In der ersten Planungsnachricht wird mitgeteilt, wie viele und wann Frames für die Übertragung von Cell Broadcast-Nachrichten zugewiesen sind. Nur in diesen Frames können dann CBS-Nachrichten übertragen werden.

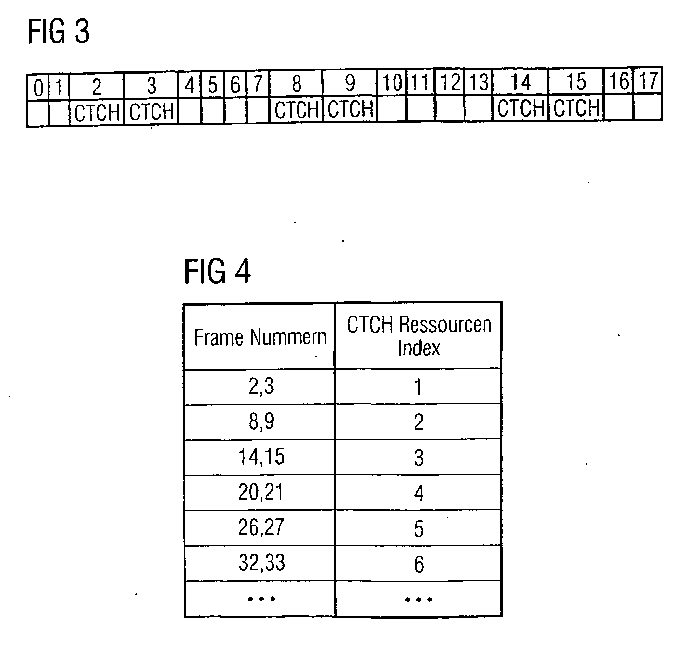

Die Abbildung von Figur 3 zeigt ein Beispiel für die Zuweisung von Frames bzw. Rahmen zu dem logischen Kanal CTCH, über den die Übertragung von Cell Broadcast-Nachrichten stattfindet. Es wird dort ein Versatz bzw. Offset von zwei Frames zu Frame Nr.0, eine Periodizität der allokierten Ressourcen von sechs Frames und eine Anzahl der aufeinanderfolgenden Frames von zwei angenommen. Ein Mobilfunkgerät UE, das CBS-Nachrichten empfangen möchte, muss nun nicht jeden Frame, sondern nur die Frames mit den Nummern 2/3, 8/9, 14/15 usw. auf ihren Inhalt überprüfen. Damit wird der Verarbeitungsaufwand und mithin auch der Energiebedarf innerhalb der UE gesenkt.

Für CBS DRX wird ein Index-Schema verwendet, das den Sets von Ressourcen bzw. Frames einen Index zuordnet, wie in der Abbildung von Figur 4 dargestellt. Die Zuweisung der Ressourcen in der darauf folgenden zweiten Stufe der Planung bzw. der zweiten Planungsnachricht kann dann sehr einfach über diese Indizes erfolgen.

Für die zweite Stufe der Planung (CBS DRX Level 2) wird eine sogenannte "Inband Scheduling"-Nachricht (Inband-Planungsnachricht) bzw. zweite Planungsnachricht auf dem logischen Kanal CTCH zusammen mit der eigentlichen Cell Broadcast-Nachricht übertragen und vom BMC (BMC1) ausgewertet. In dieser zweiten Planungsnachricht oder CBS DRX Level 2-Nachricht werden den UEs (UE11) verschiedenen Information übermittelt, beispielsweise darüber, welche der CBS-Nachrichten, d.h. der eigentlichen Nutzdatennachrichten, welche Themen oder Inhalte (z.B. Wetterinfos) umfassen und ob sich diese Nachrichten bzw. die darin enthaltenen Informationen seit der letzten Übertragung geändert haben. Auf diese Weise empfängt das Endgerät (UE11) nur dann CBS-Nachrichten, wenn entweder nützliche Informationen, die noch nicht zuvor empfangen wurden, oder erneut DRX-level-2 Informationen übertragen werden. Für die Realisation der zweiten DRX-Stufe bzw. der zweiten Planungsnachricht ist das Broadcast/Multicast Control (BMC, in Figur 2: BMC1 und BMC2)-Protokoll [1] des UMTS Protokollstapels zuständig, weshalb die von diesem Protokoll verschickten Nachrichten auch als "BMC-"-Planungsnachrichten (BMC-Schedule-Nachrichten) bezeichnet werden können.

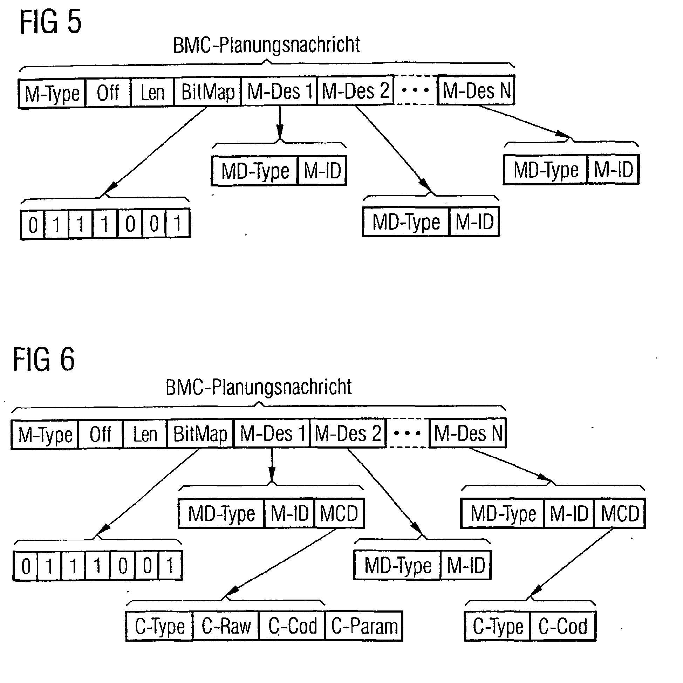

In der zweiten Stufe der Planung wird ferner die Übertragungszeit in sogenannte Zeitperioden oder DRX-Perioden unterteilt und für jede Periode werden mindestens einmal durch die BMC-Planungsnachrichten oder zweiten Planungsnachrichten Informationen über die in der Periode gesendeten CBS-Nachrichten (Nutzdatennachrichten) mitgeteilt [1]. Ein Beispiel einer BMC-Planungsnachricht ist in Figur 5 dargestellt. Diese BMC-Planungsnachricht enthält neben einem Informationselement "M-Type" zur Kennzeichnung der Nachricht (d.h. z.B. dass es sich um eine Planungsnachricht und nicht um eine Nutzdatennachricht handelt) und einer Information "Off" über einen Versatz bzw. ein Offset zum ersten für die Übertragung von CBS-Nachrichten genutzten Frame der DRX-Periode eine Information "Len" über die Länge DRX-Periode. Ferner umfasst die BMC-Planungsnachricht ein Bitmap Feld "BitMap" hier als ein beispielhaftes Feld mit 7 Bit, das für jede in der folgenden DRX-Periode übertragene CBS-Nachricht durch Setzen eines Bit angibt, ob die Nachricht neu ist oder schon einmal übertragen wurde. Außerdem umfasst die BMC-Planungsnachricht eine Liste von Nachrichtenbeschreibungen "M-Des", von denen eine pro CBS-Nachricht (Nutzdatennachricht) der folgenden DRX-Periode in der Liste vorhanden ist und einen Nachrichtenbeschreibungstypen "MD-Type", der beispielsweise angibt, ob es sich bei der Nachricht um eine Wiederholung innerhalb derselben DRX-Periode oder eine neue Nachricht handelt, sowie, je nach MD-Type, für neue Nachrichten eine Nachrichten-Identifikation "M-ID" aufweist, die den Inhalt der Nachricht (beispielsweise Wetterinformationen) angibt, oder für wiederholte Nachrichten einen Verweis auf den ersten Sendezeitpunkt der Nachricht. Es sei bemerkt, dass in den Figuren 5 und 6 Pfeile eine detaillierte Beschreibung eines Informationselements einer Nachricht kennzeichnen.

Es ist nun auch denkbar, bei der Übertragung von CBS-Nachrichten bzw. Nutzdatennachrichten im CBS, wie er in UMTS (vgl. obige Beschreibung) oder GSM (GSM: global system for mobile communication) spezifiziert ist, auch eine Übertragung von Nachrichten mit multimedialen Inhalten vorzusehen. Ein derartiger Dienst bzw. Service kann allgemein als ein "Multimedia Broadcast Service" (MBS) bezeichnet werden. Um zu verhindern, dass ein bestimmtes Teilnehmergerät Nutzdatennachrichten empfängt bzw. zu verarbeiten versucht, dessen Inhalte es gar nutzbar machen kann (z.B. in Form von Anzeigen im Fall eines übertragenen Farbbildes auf einer Anzeige des Teilnehmergeräts oder Abspielen im Falle einer akustischen Audiodatei) wird gemäß einer Ausführungsform der Erfindung folgendes Prinzip vorgeschlagen. Ausgehend von dem gerade dargestellten Verfahren des diskontinuierlichen Empfangs (DRX) von Nachrichten soll dabei in der ersten und/oder der zweiten Planungsnachricht, vorzugsweise jedoch in der zweiten Planungsnachricht, eine Information bzw. Beschreibungsinformation übertragen werden, die angibt, in welcher Form bzw. welcher Art die gegebenenfalls kodierten Nutzdaten in den zu übertragenden Nutzdatennachrichten vorliegen und damit, welche Fähigkeiten ein Teilnehmergerät aufweisen muss, um diese Daten zu dekodieren bzw. dem Benutzer des Teilnehmergeräts nutzbar zu machen (abspielen, anzeigen, usw.).

Der Vorteil dieser zusätzlich übertragenen Beschreibungsinformation liegt darin, dass ein Teilnehmergerät die empfangenen Nutzdatennachrichten nicht nur auf solche Nachrichten einschränkt, die es noch nicht empfangen hat und deren Inhalt für den Benutzer des Teilnehmergeräts interessant sind, sondern auch auf die Nachrichten, die es aufgrund seiner Geräteeigenschaften bzw. Fähigkeiten verarbeiten und dem Nutzer nutzbar machen kann. Somit wird ein Verfahren zum diskontinuierlichen Empfang (DRX) also derart erweitert, dass ein Endgerät zusätzlich Empfangsenergie spart, indem es Nutzdatennachrichten, die es nicht dekodieren oder beispielsweise anzeigen bzw. abspielen kann, nicht empfängt. Das bedeutet, erkennt ein Teilnehmergerät anhand einer Beschreibungsinformation in einer (ersten und/oder zweiten) Planungsnachricht, dass es die in einer Nutzdatennachricht enthaltenen Nutzdaten nicht verarbeiten kann, so werden die entsprechenden Nutzdatennachrichten nicht vom angekündigten Übertragungskanal gelesen bzw. abgehört, was zu einer Verringerung des Signalverarbeitungsaufwandes und somit zu einer Verringerung des Energiebedarfes führt.

Im Folgenden soll anhand von Figur 6 eine bevorzugte Ausführungsform der Erfindung eines Verfahrens zum diskontinuierlichen Empfang (DRX) im Rahmen bzw. als Erweiterung des bezüglich dem UMTS spezifizierten Cell-Broadcast-Service erläutert werden. Da die erste Stufe der Discontinuous Reception bzw. des diskontinuierlichen Empfangs (DRX) dabei nicht verändert wird, wird im Folgenden nur auf die zweite Stufe bezüglich der zweiten Planungsnachricht eingegangen.

Entsprechend zu der in Figur 5 dargestellten zweiten Planungsnachricht bzw. BMC-Planungsnachricht, wie sie in UMTS spezifiziert ist, sind auch in der in Figur 6 dargestellten zweiten Planungsnachricht für jede CBS-Nachricht bzw. Nutzdatennachricht, die in der folgenden DRX-Periode auf dem für CBS verwendeten Übertragungskanal gesendet wird, unter anderem folgende Informationen enthalten:
- Nachricht ist neu oder alt ("BitMap").
- Nachricht sollte / muss / muss nicht gelesen werden ("MD-Type").
- Nachrichten-Identifikation, die den Inhalt der Nachricht spezifiziert, z.B. Wetterinformationen ("M-ID").

Diese BMC-Planungsnachricht wird nun ferner um einen Satz von Informationselementen (auch als MCD: "Message Contents Description" = Nachrichteninhaltsbeschreibung bezeichnet) für jede CBS- bzw. MBS-Nachricht (Nutzdatennachricht) der folgenden DRX-Periode erweitert, der folgende Informationen enthält. Wie es in Figur 6 gezeigt ist, wurde gemäß der dort dargestellten vorteilhaften Ausgestaltung dabei ein jeweiliges Informationsfeld "M-Des(1, usw.)" um ein Informationsfeld "MCD" erweitert, das folgende Informationselement aufweist:
- Art der Daten bzw. den Datentyp, z.B. Audio-, Video-, Text-oder Bild-Daten (in dem Informationselement "Contents-Type", oder kurz "C-Type" in Figur 6 vorgesehen)
- eventuell Parameter der unkodierten Daten, z.B. für Bilder: Abmessungen in Pixel horizontal / vertikal (in dem Informationselement "C-Raw" in Figur 6 vorgesehen)
- Art der Kodierung, z.B. für Audio: keine, MP3, AMR, WAV (in dem Informationselement "C-Cod" in Figur 6 vorgesehen)
- eventuell Parameter der Kodierung (wenn nötig, je nach Kodierung) (in dem Informationselement "C-Param" in Figur 6 vorgesehen)

Es sei bemerkt, dass die Informationselemente "C-Type", "C-Raw", "C-Cod", "C-Param" anstelle dem neuen Informationsfeld "MCD" auch einem anderen Informationsfeld, wie dem Informationsfeld "MD-Type", zu dessen Informationserweiterung zugewiesen werden können.

Beim Verfahren der zweiten Stufe des diskontinuierlichen Empfangs wird nun eine derartige in Figur 6 dargestellte BMC-Planungsnachricht wie im Stand der Technik über einen geeigneten Übertragungskanal zu den Teilnehmergeräten übertragen. Die Teilnehmergeräte, die in der Lage sind, CBS-Nachrichten zu empfangen, empfangen die BMC-Planungsnachricht, werten diese aus und entscheiden auf herkömmliche Weise zunächst, welche Nachrichten bzw. Inhalte oder Themen (z.B. Wetternachrichten) für einen Empfang in Frage kommen.

Aus diesen Nachrichten werden dann gemäß der bevorzugten Ausführungsform der Erfindung diejenigen herausgefiltert, die ein Teilnehmergerät aufgrund seiner Beschaffenheit bzw. Fähigkeiten (beispielsweise Display-Größe, Dekodierungssoftware, Speichermöglichkeiten) nicht auswerten, dekodieren oder dem Nutzer nutzbar machen kann.

Es ist somit möglich, dass ein Benutzer eines Teilnehmergeräts zum einen auswählt, welche Nachrichteninhalte er gerne empfangen möchte und eventuell ferner auswählt, welche Datentypen von Nutzdaten bzw. mit welcher Kodierung er für den Empfang zulässt (z.B. nur unkodierte Textdaten, um möglichst wenig Energie und Zeit für die Verarbeitung aufbringen zu müssen). Das Teilnehmergerät kann dann die Wünsche des Benutzers berücksichtigen und nur die Nutzdatennachrichten empfangen bzw. herausselektieren, für die es ausgelegt ist, d.h. für die es seitens des Benutzers bestimmt worden ist und eventuell ferner die, die es tatsächlich verarbeiten kann. Somit ist eine effiziente und energieverbrauchoptimierte Nachrichtenübertragung gewährleistet.

Schließlich sei noch folgendes Beispiel zu der gerade erläuterten bevorzugten Ausführungsform der Erfindung dargestellt. Es wird angenommen, dass ein Teilnehmergerät (wie ein Mobiltelefon) einen MP3-Player (z.B. als spezielle Software) und ein Display mit der Auflösung 50x50 Pixel jedoch keinen Videoplayer (z.B. als spezielle Software) integriert hat. Der Benutzer habe sein Teilnehmergerät so eingestellt, dass es CBS- bzw. MBS- Nachrichten empfangen soll, die Audio-Sequenzen, Text und Bilder enthalten, nicht aber solche die Video-Sequenzen enthalten.

Für dieses Beispiel sei ferner angenommen, das der Benutzer Einstellungen für Nachrichten mit einer beispielhaften Message-ID 4096 vorgenommen hat.

Nun enthalte eine CBS-Planungsperiode drei CBS- bzw. MBS-Nachrichten, mit der Message ID 4096, die neu sind und von einem herkömmlichen Teilnehmergerät empfangen bzw. gelesen würden. Die Daten in den Nachrichten seien von folgender Art:
- Nachricht 1: Typ = Audio ("C-Type"), Länge = 10 Sekunden ("C-Raw"), Kodierung = MP3 ("C-Cod")
- Nachricht 2: Typ = Video ("C-Type"), Auflösung = 50 x 50 und Länge = 10 Sekunden ("C-Raw"), Kodierung = MPEG 4 ("C-Cod")
- Nachricht 3: Type = Bild ("C-Type"), Auflösung = 150 x 100 ("C-Raw"), Kodierung = JPEG (C-Cod)

Ein Teilnehmergerät gemäß einer Ausführungsform der Erfindung entscheidet entsprechend seinen Fähigkeiten, dass Nachricht 1 empfangen wird um sie, wenn der Benutzer dies wünscht, abzuspielen. Ferner wird entschieden, Nachricht 2 nicht zu empfangen, da Video-Daten nicht dargestellt werden können. Nachricht 3 wird nur empfangen, wenn das Endgerät eine Möglichkeit bietet, größere Bilder auf dem kleineren Display zu scrollen oder die Bilder verkleinert darzustellen.

Es sei bemerkt, dass die gerade beschriebenen Prinzipien (in Bezug auf die Einführung einer Planungsinformation, die die Form, d.h. Datentyp und/oder Kodierung, der zu übertragenden Nutzdatennachrichten angibt) des Verfahrens zum diskontinuierlichen Empfang (DRX) von Nutzdatennachrichten bezüglich eines Cell Broadcast Services auch auf ein Verfahren zum diskontinuierlichen Empfang (DRX) von Nutzdatennachrichten bezüglich Multicast (MC) bzw. eines Multicast Services, insbesondere im UMTS, anwendbar sind.

Ein derartiges Verfahren mit Nutzung eines gerade beschriebenen diskontinuierlichen Empfangs (DRX) für Multicast-Services wird nachfolgend als MC DRX bezeichnet.

Die Planung für MC DRX, welche Ressourcen für MC Services zur Verfügung stehen und wann diese Ressourcen Multicast-Nachrichten transportieren, wird, dem CBS vergleichbar, durch entsprechende Nachrichten bekannt gemacht. Die Nachrichten für die Planung und Zuweisung der Ressourcen enthalten dafür u.a. Information über die Multicast-Gruppen. In einer Ausführungsform der die Multicast-Gruppen durch eine MC Gruppen-Adresse oder eine MC Gruppen-Identität indiziert.

Die Planung für MC DRX, auf welchen Übertragungskanälen, d.h. physikalischen Kanälen oder Transport-Kanälen, wann Frames bzw. Ressourcen für MC-Services zur Verfügung stehen und wann diese Ressourcen Multicast-Nachrichten transportieren, werden wiederum durch sogenannte "Scheduling-Nachrichten" oder Planungsnachrichten bekannt gemacht. Auf der Grundlage dieser Planungsnachrichten werden die verschiedenen UMTS-Protokollschichten durch die Funkressourcen-Kontrolleinheit RRC konfiguriert. Damit ist bereits auf der physikalischen Ebene bekannt, in welchen Ressourcen überhaupt MC-Nachricht bzw. weitere Planungsnachrichten zu erwarten sind. Des weiteren kann die BMC-Schicht durch die Auswertung weiterer Informationen entscheiden, welche MC-Nachrichten wirklich empfangen werden sollen. Die Planung wird entsprechend dem CBS in zwei Stufen realisiert, wie nachfolgend beschrieben:

Die erste Stufe der Planung, MC DRX Level 1, signalisiert unter Verwendung einer ersten Planungsnachricht, welche physikalischen Kanäle und Transport-Kanäle für die Übertragung von Planungsinformationen zur Vorbereitung der Übertragung einer MC-Nachricht genutzt werden. Gegenüber dem CBS wird der CTCH für MC-Services nämlich auch optional auf andere Transport-Kanäle als den FACH und andere physikalische Kanäle als den S-CCPCH abgebildet. Des weiteren werden in der MC DRX Level 1-Nachricht bzw. ersten Planungsnachricht Informationselemente übertragen, welche Rahmen bzw. Frames der physikalischen Kanäle für die Übertragung weiterer Planungsinformationen reserviert bzw. zugewiesen sind.

Diese Signalisierung wird als Teil der System-Informationen zum RRC über den logischen Kanal BCCH übertragen. Es wird in der MC DRX Level 1-Nachricht also mitgeteilt, wo, wie viele und wann überhaupt Ressourcen für die Übertragung von Multicast (MC)-Nachrichten (Nutzdatennachrichten) zugewiesen sind. Nur in diesen Frames können dann MC-Nachrichten übertragen werden.

Für MC DRX kann ein wiederum ein Index-Schema entsprechend dem der Figuren 3 und 4 verwendet werden, das den Sets von Ressourcen in Kombination mit den genutzten physikalischen Kanälen und Transport-Kanälen Indizes zuordnet. Die Zuweisung der Ressourcen in der darauf folgenden zweiten Stufe der Planung erfolgt dann sehr einfach über diese Indizes.

Für die zweite Stufe der Planung, MC DRX Level 2, wird wieder eine sogenannte "Inband Scheduling Nachricht" bzw. zweite Planungsnachricht zusammen mit der eigentlichen MC-Nachricht übertragen und vom BMC ausgewertet. In dieser MC DRX Level 2-Nachricht werden den Teilnehmerendgeräten (UE11, UE21, ...) verschiedenen Information entsprechend den Figuren 5 und 6 bezüglich des CBS übermittelt.

Für den Fall, dass die bereits bestehende DRX für CBS um die Funktionalität erweitert wird, MC DRX zu unterstützen, wird in der zweiten Planungsnachricht ein Informationselement eingeführt, das zur Unterscheidung dient, ob es sich bei den reservierten Ressourcen um Ressourcen für Broadcast- oder Multicast-Services handelt. Beispielsweise kann das Informationsfeld "Nachrichten Typ" bzw. "M-Type" dafür genutzt werden, um eine CBS-Nachricht, MC-Nachricht, Planungsnachricht usw. voneinander zu unterscheiden.

Zum Erreichen eines Verfahrens zur Nutzdatenübertragung im MC DRX gemäß einer Ausführungsform der Erfindung ist es jedoch wichtig, in einer der beiden Planungsnachrichten, insbesondere der zweiten, ein Informationselement bezüglich der Form der Nutzdatennachrichten einzuführen, beispielsweise in der Art und weise, wie es bezugnehmend auf Figur 6 unter Verwendung der Informationselemente "C-Type", "C-Raw", "C-Cod", "C-Param" beschrieben worden ist.

Hintergrundangaben u.a. zu den in der vorliegenden Anmeldung behandelten Protokollen finden sich zusammengefasst insbesondere an folgenden Stellen:
[1] 3GPP TS 25.324 V3.4.0, Broadcast/Multicast Control BMC, Release 1999
[2] 3GPP 25.211, Physical Channels and mapping of transport channels onto physical channels, Release 99

## Patentansprüche

1. Verfahren zum Übertragen von Nutzdatennachrichten von einem Netzwerkelement (BS1) eines Funkkommunikationssystems (FCS) über mindestens einen Übertragungskanal (PCS) an ein oder mehrere Teilnehmergeräte (UE11, UE21, UE31, UE42) des Funkkommunikationssystems (FCS), wobei mittels einer Planungsinformation (BMC-Planungsnachricht; C-Type, C-Raw, C-Cod, C-Param) die Form der Nutzdatennachrichten vor deren Übertragung angekündigt wird, **dadurch** gekennzeichet, daß die Form der zu übertragenden Nutzdatennachrichten den Datentyp (C-Type) und/oder die Kodierung (C-Cod) der Nutzdatennachrichten umfasst.

2. Verfahren nach Anspruch 1, bei dem die Planungsinformation eine erste Planungsnachricht, mittels der über einen ersten separaten Übertragungskanal das Übertragen der Nutzdatennachrichten angekündigt wird, und eine zweite Planungsnachricht (BMC-Planungsnachricht) umfasst, mittels der über mindestens einen zweiten Übertragungskanal eine Beschreibungsinformation (C-Type, C-Raw, C-Cod, C-Param) übertragen wird, die die Form der zu übertragenden Nutzdatennachrichten angibt.

3. Verfahren nach Anspruch 1, bei dem der Datentyp ein Text-, Bild-, Audio-, oder Video-Format umfasst.

4. Verfahren nach einem der Ansprüche 1 bis 3, bei dem die Kodierung ein MP3 (-Format, AMR-Format, WAV-Format, JPEG-Format oder ein MPEG4-Format umfasst.

5. Verfahren nach Anspruch 2, bei dem die Beschreibungsinformation bezüglich der Nutzdatennachrichten ferner Parameter (C-Raw) mit Bezug auf den Datenumfang, die Bildabmessung bei Bild- und/oder Videodaten, oder die Abspieldauer bei Audio-und/oder Videodaten umfasst.

6. Verfahren nach einem der Ansprüche 1 bis 5, das im Rahmen eines Broadcast-Dienstes, insbesondere als Erweiterung eines Cell Broadcast Service (CBS), oder eines Multicast-Dienstes durchgeführt wird.

7. Verfahren nach Anspruch 1 oder 6, bei dem das Funkkommunikationssystem (FCS) nach dem UMTS-Standard betrieben wird.

8. Verfahren nach einem der Ansprüche 2 oder 5, bei dem die erste Planungsnachricht Information darüber enthält, wann und auf welchem mindestens einen zweiten separatem Übertragungskanal zweite Planungsnachrichten und/oder Nutzdatennachrichten übertragen werden.

9. Verfahren nach einem der Ansprüche 1 bis 8, bei dem das eine oder die mehreren Teilnehmergeräte (UE11, UE21, UE31, UE42) nur diejenigen Nutzdatennachrichten empfangen, für deren Verarbeitung es oder sie ausgelegt sind.

10. Verfahren nach einem der Ansprüche 1 bis 9, bei dem als Teilnehmergerät (UE11, UE21, UE31, UE42) ein Mobilfunkgerät, insbesondere ein Mobiltelefon, verwendet wird.

11. Verfahren nach einem der vorhergehenden Ansprüche, bei dem das eine oder die mehreren Teilnehmergeräte (UE11, UE21, UE31, UE42) nur diejenigen Nutzdatennachrichten empfangen, die sie hinsichtlich der angekündigten Form in der Lage sind, zu verarbeiten.

12. Teilnehmergerät (UE11, UE21, UE31, UE42) eines Funkkommunikationssystems (FCS), bei dem über mindestens einen Übertragungskanal (PCS) an das Teilnehmergerät Nutzdatennachrichten übertragen werden, deren Form mittels einer Planungsinformation (BMC-Planungsnachricht; C-Type, C-Raw, C-Cod, C-Param) vor deren Übertragung angekündigt wird, **dadurch** gekennzeichet, daß die Form der zu übertragenden Nutzdatennachrichten den Datentyp (C-Type) und/oder die Kodierung (C-Cod) der Nutzdatennachrichten umfasst, wobei das Teilnehmergerät derart ausgebildet ist, nur diejenigen Nutzdatennachrichten zu empfangen, die es hinsichtlich der angekündigten Form in der Lage ist, zu verarbeiten.

13. Funkkommunikationssystem (FCS) mit folgenden Merkmalen:
einem oder mehreren Teilnehmergeräten;
einem Netzwerkelement, das dafür eingerichtet ist, über mindestens einen Übertragungskanal (PCS) an das eine oder die mehreren Teilnehmergeräte (UE11, UE21, UE31, UE42) Nutzdatennachrichten zu übertragen, wobei mittels einer Planungsinformation (BMC-Planungsnachricht; C-Type, C-Raw, C-Cod, C-Param) die Form der Nutzdatennachrichten vor deren Übertragung angekündigt wird, **dadurch gekennzeichnet, daß** die Form der zu übertragenden Nutzdatennachrichten den Datentyp (C-Type) und/oder die Kodierung (C-Cod) der Nutzdatennachrichten umfasst.

## Revendications

1. Procédé de transmission de messages de données utiles d'un élément de réseau (BS1) d'un système de radiocommunication (FCS) à un ou plusieurs appareils d'abonnés (UE11, UE21, UE31, UE42) du système de radiocommunication (FCS) par l'intermédiaire d'au moins un canal de transmission (PCS), la forme des messages de données utiles étant annoncée, avant leur transmission, au moyen d'une information de planification (message de planification BMC; C-Type, C-Raw, C-Cod, C-Param), **caractérisé en ce que** la forme des messages de données utiles à transmettre comprend le type des données (C-Type) et/ou le codage (C-Cod) des messages de données utiles.

2. Procédé selon la revendication 1, dans lequel l'information de planification comprend un premier message de planification, au moyen duquel la transmission des messages de données utiles est annoncée par l'intermédiaire d'un premier canal de transmission séparé, et un deuxième message de planification (message de planification BMC), au moyen duquel est transmise, par l'intermédiaire d'au moins un deuxième canal de transmission, une information de description (C-Type, C-Raw, C-Cod, C-Param) qui indique la forme des messages de données utiles à transmettre.

3. Procédé selon la revendication 1, dans lequel le type de données comprend un format de type texte, image, audio ou vidéo.

4. Procédé selon l'une des revendications 1 à 3, dans lequel le codage comprend un format MP3, un format AMR, un format WAV, un format JPEG ou un format MPEG4.

5. Procédé selon la revendication 2, dans lequel l'information de description concernant les messages de données utiles comprend en outre des paramètres (C-Raw) relatifs au volume des données, aux dimensions de l'image dans le cas de données de type image et/ou vidéo ou à la durée du déroulement dans le cas de données audio et/ou vidéo.

6. Procédé selon l'une des revendications 1 à 5, lequel est mis en oeuvre dans le cadre d'un service broadcast, en particulier en tant qu'extension d'un «Cell Broadcast Service» (CBS) ou d'un service multicast.

7. Procédé selon la revendication 1 ou 6, dans lequel le système de radiocommunication (FCS) est exploité selon le standard UMTS.

8. Procédé selon l'une des revendications 2 ou 5, dans lequel le premier message de planification contient une information renseignant quand et sur quel au moins un deuxième canal de transmission séparé des deuxièmes messages de planification et/ou messages de données utiles sont transmis.

9. Procédé selon l'une des revendications 1 à 8, dans lequel l'un ou les plusieurs appareils d'abonnés (UE11, UE21, UE31, UE42) ne reçoivent que les messages de données utiles pour le traitement desquels il(s) est/sont conçu(s).

10. Procédé selon l'une des revendications 1 à 9, dans lequel on utilise, en tant qu'appareil d'abonné (UE11, UE21, UE31, UE42), un appareil radio mobile, en particulier un téléphone mobile.

11. Procédé selon l'une des revendications précédentes, dans lequel l'un ou les plusieurs appareils d'abonnés (UE11, UE21, UE31, UE42) ne reçoivent que les messages de données utiles qu'ils sont en mesure de traiter eu égard à la forme annoncée.

12. Appareil d'abonné (UE11, UE21, UE31, UE42) d'un système de radiocommunication (FCS) dans lequel sont transmis à l'appareil d'abonné, par l'intermédiaire d'au moins un canal de transmission (PCS), des messages de données utiles dont la forme est annoncée, avant leur transmission, au moyen d'une information de planification (message de planification BMC; C-Type, C-Raw, C-Cod, C-Param), **caractérisé en ce que** la forme des messages de données utiles à transmettre comprend le type de données (C-Type) et/ou le codage (C-Cod) des messages de données utiles, l'appareil d'abonné étant réalisé de manière à ne recevoir que les messages de données utiles qu'il est en mesure de traiter eu égard à la forme annoncée.

13. Système de radiocommunication (FCS) avec les caractéristiques suivantes:
un ou plusieurs appareils d'abonnés,
un élément de réseau aménagé pour transmettre des messages de données utiles à l'un ou aux plusieurs appareils d'abonnés (UE11, UE21, UE31, UE42) par l'intermédiaire d'au moins un canal de transmission (PCS), la forme des messages de données utiles étant annoncée, avant leur transmission, au moyen d'une information de planification (message de planification BMC; C-Type, C-Raw, C-Cod, C-Param), **caractérisé en ce que** la forme des messages de données utiles à transmettre comprend le type des données (C-Type) et/ou le codage (C-Cod) des messages de données utiles.

## Claims

1. Method for transmitting user data messages from a network element (BS1) of a radio communication system (FCS) over at least one transmission channel (PCS) to one or more subscriber devices (UE11, UE21, UE31, UE42) of the radio communication system (FCS), with the form of the user data messages being announced by means of a planning information (BMC planning message; C-Type, C-Raw, C-Cod, C-Param) before their transmission, **characterised in that** the form of the user data messages to be transmitted comprises the data type (C-Type) and/or the coding (C-Cod) of the user data messages.

2. Method according to claim 1, in which the planning information comprises a first planning message by means of which the transmission of the user data messages is announced via a first separate transmission channel, and a second planning message (BMC planning message) by means of which a description information (C-Type, C-Raw, C-Cod, C-Param) specifying the form of the user data messages that are to be transmitted is transmitted via at least one second separate transmission channel.

3. Method according to claim 1, in which the data type includes a text, image, audio or video format.

4. Method according to one of the claims 1 to 3, in which the coding includes an MP3 format, AMR format, WAV format, JPEG format or an MPEG4 format.

5. Method according to claim 2, in which the description information relating to the user data messages also includes parameters (C-Raw) which refer to the data volume, the image dimensions for image and/or video data, or the playback duration for audio and/or video data.

6. Method according to one of the claims 1 to 5, which is carried out in the framework of a broadcast service, in particular as an extension of a Cell Broadcast Service (CBS), or a multicast service.

7. Method according to claim 1 or 6, in which the radio communication system (FCS) is operated in accordance with the UMTS standard.

8. Method according to one of the claims 2 to 5, in which the first planning message contains information about when and on which second separate transmission channel, of which there is at least one, second planning messages and/or user data messages are transmitted.

9. Method according to one of the claims 1 to 8, in which the subscriber device or plurality of subscriber devices (UE11, UE21, UE31, UE42) receives only those user data messages which it is designed to process.

10. Method according to one of the claims 1 to 9, in which a mobile radio device, in particular a mobile phone, is used as a subscriber device (UE11, UE21, UE31, UE42).

11. Method according to one of the preceding claims, in which the subscriber device or plurality of subscriber devices (UE11, UE21, UE31, UE42) receives only those user data messages which, having regard to the announced form, it is able to process.

12. Subscriber device (UE11, UE21, UE31, UE42) of a radio communication system (FCS), in which user data messages are transmitted over at least one transmission channel (PCS) to the subscriber device, and the form of said user data messages is announced by means of a planning information (BMC planning message; C-Type, C-Raw, C-Cod, C-Param) before their transmission, **characterised in that** the form of the user data messages which are to be transmitted includes the data type (C-Type) and/or the coding (C-Cod) of the user data messages, in which the subscriber device is designed in such a way that it receives only those user data messages which, having regard to the announced form, it is able to process.

13. Radio communication system (FCS) having the following features:
one or more subscriber devices;
a network element which is configured for transmitting user data messages over at least one transmission channel (PCS) to the subscriber device or plurality of subscriber devices (UE11, UE21, UE31, UE42), with the form of the user data messages being announced by means of a planning information (BMC planning message; C-Type, C-Raw, C-Cod, C-Param) before their transmission, **characterised in that** the form of the user data messages which are to be transmitted includes the data type (C-Type) and/or the coding (C-Cod) of the user data messages.
